(19) Europäisches Patentamt
European Patent Office
Office européen des brevets

(11) Publication number: **0 226 097 B1**

(12) **EUROPEAN PATENT SPECIFICATION**

(45) Date of publication of the patent specification: **09.05.90**

(51) Int. Cl.⁵: **C08F 222/12**, C08F 220/04, C08F 220/56, C10M 173/00, E21B 43/22, E21B 43/25

(21) Application number: **86116539.7**

(22) Date of filing: **28.11.86**

(54) **Hydrophobe associative composition containing a polymer of a water-soluble monomer and an amphiphilic monomer.**

(30) Priority: **02.12.85 US 803756**

(43) Date of publication of application: **24.06.87 Bulletin 87/26**

(45) Publication of the grant of the patent: **09.05.90 Bulletin 90/19**

(84) Designated Contracting States: **AT BE CH DE ES FR GB GR IT LI NL SE**

(56) References cited:
**EP-A- 0 109 820**
**GB-A- 1 004 055**
**US-A- 3 551 479**

(73) Proprietor: **THE DOW CHEMICAL COMPANY, P.O. Box 1967, Midland, MI 48641-1967(US)**

(72) Inventor: **van Phung, K., 2203 Eastlawn Drive 9, Midland Michigan 48640(US)**
Inventor: **Evani, Syamalarao, 5117 Campau, Midland Michigan 48640(US)**

(74) Representative: **Casalonga, Axel et al, BUREAU D.A. CASALONGA - JOSSE Morassistrasse 8, D-8000 München 5(DE)**

EP 0 226 097 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to hydrophobe associative compositions that increase the viscosity of aqueous media containing water-soluble electrolytes.

As taught in Encyclopedia of Polymer Science and Technology, Interscience Publishers, Vol. I, 192 (1964); and Kirk-Othmer's Encyclopedia of Chemical Technology, Vol. 20, 3d Ed., (1982), pp. 207-230, John Wiley & Sons, it is known that the viscosity of an aqueous medium may be increased by the addition of a water-soluble polymer. Such water-soluble polymers include polyacrylamide, acrylamide/acrylic acid copolymer, sodium polyacrylate, carboxymethyl cellulose, hydroxyethyl cellulose, methyl cellulose, polysaccharide, as well as naturally occurring gums, such as, for example, guar gum and chemically modified gums such as, for example, hydroxypropyl guar gum. As a result of this thickening capability, there are many existing, as well as potential, industrial applications for aqueous media thickened with such water-swellable polymers.

Unfortunately, however, the aforementioned conventional water-soluble polymers suffer from deficiencies or limitations in actual use in such industrial applications. For example, for reasons of efficiency and economical considerations, it is common to employ very high molecular weight versions of such polymers. However, during many industrial applications, the conditions present during the practice of the application involve exposing an aqueous medium containing the high molecular weight water-soluble polymer to high shear. Such shear often causes mechanical degradation of the polymer and thus reduces the viscosity of the aqueous medium. While lower molecular weight polymers are less sensitive to shear degradation, they must be used in much higher concentrations in order to achieve the desired level of viscosity.

Secondly, while ionic water-soluble polymers such as neutralized acrylamide/acrylic acid copolymer, sodium polyacrylate, polystyrene sulfonate and the like are more efficient thickeners in deionized water than their nonionic counterparts, their thickening ability is greatly reduced by the presence of water-soluble electrolytes such as sodium chloride, calcium chloride and magnesium sulfate in the aqueous medium. Such electrolytes are present in the aqueous media employed in most industrial applications, particularly those requiring the use of ground waters in subterranean formations as in enhanced oil recovery.

Finally, in many applications, the aqueous medium thickened with water-soluble polymer is exposed to temperatures in the range of 30°C to 100°C which normally causes reduction of viscosity. Such high temperatures are particularly common in enhanced oil recovery applications wherein the aqueous medium is pumped underground to depths of 1524 to 6096 m (5,000 to 20,000 feet), as is common for mobility control fluids and packing fluids.

In attempts to overcome some of the aforementioned deficiencies of the conventional water-soluble polymers, it has been a common practice to cross-link the polymer in order to improve resistances to thermal as well as shear degradation. See, for example, US-A 3,247,171. Such attempts have generally not been successful.

More recently, as taught in US-A 3,984,333, an aqueous medium has been thickened by dissolving a block copolymer having water-soluble blocks and water-insoluble blocks in the aqueous medium. While such block copolymers apparently exhibit reasonably good resistance to shear degradation, such polymers are difficult and often impractical to prepare. More importantly, such polymers do not exhibit significant tolerance of electrolytes normally present in the aqueous media to be thickened.

While the cellulosic derivatives such as hydroxyethyl cellulose and biopolymers exhibit acceptable tolerance to the presence of electrolytes, cellulosic derivatives are generally ineffective at the low concentrations that are economical and exhibit poor thermal stability. The biopolymers such as xanthan gums exhibit acceptable thermal stability, resistance to shear degradation and electrolytic tolerance. Unfortunately, such biopolymers are generally very expensive and are susceptible to biodegradation.

US-A 4,463,152 discloses a copolymer of acrylamide and nonionic surfactant monomers such as:

$$R-O\left(CH_2CH_2O\right)_n\overset{O}{\overset{\|}{C}}-\overset{R}{\overset{|}{C}}=CH_2 \qquad I$$

wherein R is hydrophobic and n is 1-60. The patent claims that these copolymers are more efficient viscosification agents than homopolymers of acrylamide and are different from hydrolyzed polyacrylamides (a copolymer of acrylamide and acrylic acid) by virtue of higher thickening ability and concentration dependence of viscosity in a brine environment and often higher retention of viscosity in the presence of inorganic electrolytes. The patent states that the small amount of hydrophobic or water-insoluble alkyl group on the surfactant monomer is believed to result in intermolecular aggregation or interaction in solution, resulting in enhanced viscosity relative to a noninteracting polymer such as polyacrylamide.

US-A 3,551,479 discloses a monomer which may be useful in the instant invention;

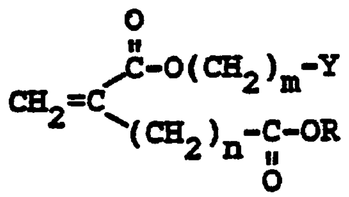

II

wherein Y is a sulfonate group, m is an integer from 2 to 4, n is 1 or 2, and R is a hydrophobic radical or a nonylphenol ethoxylate having 1 to 40 ethoxy groups and attached to the compound through the terminal ethoxy group. The patent discloses that this monomer may be copolymerized with numerous polymerizable ethylenically unsaturated compounds including at column 4, acrylic acids and acrylic amides.

The utility disclosed for the monomer is the capability of polymerically combining with copolymerizable ethylenically unsaturated compounds dispersed in an aqueous medium to provide a very stable latex containing polymer particles comprising the anionic polymerizable surfactant as an immobile integral component of the polymer.

US-A 4,432,881 discloses a thickened aqueous medium having dispersed therein a hydrophobe associative polymer which is a water-soluble polymer having pendant hydrophobic groups and a water-dispersible surfactant. These compositions suffer from the shortcoming of having a surfactant present which has its own independent character and properties. These properties may conflict with the properties of the polymer. For instance, if the flocculating properties of the polymer are desired, the surfactant may independently act as a dispersing agent. While the polymer may not have foaming tendencies, the surfactant may very well have foaming tendencies, making use of the composition less than optimal.

In view of the aforementioned deficiencies of conventional water-soluble polymers, it is highly desirable to provide a relatively inexpensive polymer composition capable of increasing the viscosity of aqueous media containing water-soluble electrolytes. It is also desirable that such polymer exhibits thermal stability, electrolyte tolerance and good resistance to shear and biological degradation. It is further desirable that the aqueous media not be rendered foaming by the presence of surfactants used to aid the polymerization reaction.

These and other deficiencies of the art are overcome by the present invention which relates to a thickening agent comprising an aqueous-soluble polymerization product of:

(A) one or more water-soluble monomers which are sufficiently water-soluble to form at least a 10 weight percent solution when dissolved in water and which undergo addition polymerization to form polymers which are water-soluble; and

(B) at least one second monomer of the formula

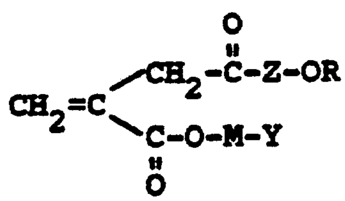

III

wherein R is a hydrocarbyl radical which may be substituted and which contributes hydrophobic character to the second monomer, Z is a divalent linking group, M is a divalent hydrocarbyl or substituted hydrocarbyl radical and Y is an ionic species which contributes hydrophilic character to the second monomer.

It is a feature of this invention that monomer 'B' contains both a hydrophobic portion to effectuate the hydrophobe association and the hydrophilic portion to render the monomer solution polymerizable without addition of surfactant. The group Z preferably hydrates in aqueous media but dehydrates as the temperature increases or the electrolyte concentration increases. This would permit stronger association of the hydrophobic portions of the polymer molecule as the electrolyte concentration increases.

It is an advantage of this invention that the aqueous media containing the hydrophobe-associated copolymer of this invention can be subjected to substantial mechanical shear without a significant loss of viscosity. This increase in viscosity is particularly enhanced by the presence of a water-soluble electrolyte in an aqueous medium being thickened. Moreover, such hydrophobe-associated copolymers may provide a substantial viscosity increase even when the aqueous medium is exposed to temperatures up to 80°C and higher.

Consequently, such copolymers can be used for a variety of applications wherein high temperatures, substantial electrolyte concentrations and conditions of higher mechanical shear, such as in high shear pumping of the aqueous medium are required.

Hydrophobe-associated copolymers that do not contain the hydrophilic portion Y as a part of one of the comonomers may require the addition of a surface-active agent in order to effectuate the polymerization. The comonomers of this invention do not require such additional surface-active agents. Accordingly, when conditions are experienced which might tend to cause foaming, solutions of the thickening agent of the invention in water have a lower foaming tendency than many prior art-thickened aqueous media while still retaining the advantages of hydrophobe association.

Unlike high molecular weight polymers currently available which thicken in aqueous media but which also give solutions which are stringy, the copolymers of this invention, when dispersed in an aqueous medium, may exhibit suitable plastic rheology and short solution characteristics. By "short solution characteristics" is meant that an aqueous medium containing the hydrophobe-associated copolymer does not produce threads or strings of such aqueous medium when surfaces wetted with the medium are contacted and pulled apart.

As a result of these and other thickening characteristics of the present invention, these copolymers may be useful in all applications which require aqueous media having increased viscosity, such as drilling mud formulations, fracturing fluids, liquid mobility control agents, aqueous solutions of inorganic salts, hydraulic fluids, lubricants, friction reducing agents, suspending agents, and aqueous suspensions of insoluble particulates such as paint formulations.

Preferably, the hydrophobe associative copolymer of this invention is aqueous-soluble, i.e., if is soluble in an aqueous medium consisting of water and 0.2 weight percent of sodium chloride. For the purposes of this invention, a hydrophobe associative copolymer is soluble in the aforementioned aqueous medium if 0.5 weight parts of the copolymer forms a thermodynamically stable solution when it is intimately mixed with 100 weight parts of the aqueous medium. Such solutions form spontaneously in the aqueous medium and include (1) true solutions in which the individual polymer molecules are dispersed, as well as (2) micellar or colloidal solutions wherein the polymer molecules are aggregated to some extent, but wherein such aggregates are no larger than colloidal size.

By "hydrophobe associative" is meant that, in aqueous media, the hydrophobic moieties of the copolymer associate thereby increasing the viscosity of the aqueous medium. Additionally, it is observed that this property of hydrophobe association is even further enhanced by the addition of a water-soluble electrolyte to the aqueous medium. This further enhancement (increase) of viscosity resulting from the addition of the electrolyte occurs in absence of any precipitation or phase separation. In fact, the occurrence of such precipitation or phase separation upon addition of the electrolyte is not desirable in the practice of this invention.

The copolymer is predominantly hydrophilic, but preferably contains a sufficient concentration of suitable hydrophobic moieties to enable it to associate with the hydrophobic moieties of other molecules of the copolymer in an aqueous medium and thus cause an increase in viscosity of the aqueous medium. The molecular weight of the copolymer is preferably low enough such that an aqueous medium containing 0.1 weight percent of the copolymer can be subjected to a degree of shear on the order of 10,000 $sec^{-1}$ without causing the copolymer to degrade significantly. Moreover, the copolymer preferably has a molecular weight such that, when 0.5 weight part of the copolymer is dissolved in 100 weight parts of water, the Brookfield viscosity of the water is increased to at least 2 centipoises (.002 Pa.s) (as measured using a Brookfield LVT viscometer equipped with a UL adapter and operated at 6 rpm and 25°C). While copolymers having very high molecular weight, e.g., weight average molecular weight ($M_w$) greater than 5 million, can be suitably employed, such copolymers tend to degrade when subjected to high shear, e.g., in excess of 10,000 $sec^{-1}$. Accordingly, such copolymers are less preferred for some applications. Preferably, the copolymers of this invention have weight average molecular weights ($M_w$) as determined by the intrinsic viscosity method described in the examples in the range from 200,000 to 5 million, most preferably from 800,000 to 2.5 million.

The hydrophobic group in the compound III which is designated as 'R' is a hydrocarbyl or substituted hydrocarbyl radical which contributes hydrophobic character to the molecule. By hydrocarbyl is meant an organic group containing hydrogen and carbon atoms configured in any of the known ways that such atoms may be structured. Substituted hydrocarbyl means that one or more of the carbons and/or hydrogens is replaced by another atom or group. For example, a $-CH_2-$ may be replaced by -O- or -S-. An -H may be replaced with -OH, Cl, Br, I, F, etc. R is preferably a pendant organic group having hydrophobicity comparable to and may be one of the following: aliphatic hydrocarbon groups having at least 8 carbons, such as $C_8$ to $C_{22}$ alkyls or cycloalkyls; polynuclear aromatic hydrocarbon groups, such as naphthyls; alkylaryls wherein the alkyl has 2 or more carbons and preferably 8 to 12 carbons; haloalkyls of 4 or more carbons, preferably perfluoroalkyls; polyalkyleneoxy groups wherein alkylene is propylene or higher alkylene and there is at least one alkyleneoxy unit per hydrophobic moiety.

The concentration of the hydrophobic moiety 'R' in the hydrophobe associative copolymer is that which is sufficient to increase the viscosity of an aqueous medium containing an electrolyte such as sodium chloride in concentration as low as 1/10 of a weight percent of the copolymer. Preferably, the concentration of hydrophobic groups in the copolymer is such that when 0.5 weight percent of the copolymer is dissolved in 100 weight parts of the aqueous medium containing at least 1 weight percent of sodium chloride, the Brookfield viscosity (as defined hereinbefore) of the aqueous medium is substantially higher than,

e.g., at least twice that of a similar aqueous medium comprising a copolymer which is identical in all respects to the hydrophobe associative copolymer except that it contains no hydrophobic groups. For example, if an aqueous solution containing 1 weight percent of sodium chloride and 1 weight percent of polyacrylamide (hydrophilic polymer) has a Brookfield viscosity of 10 cps (.01 Pa.s), the aqueous solution containing 1 weight percent of sodium chloride and 1 weight percent of the copolymer of the invention having a $M_w$ equivalence of the polyacrylamide will have a Brookfield viscosity of at least 20 cps (.02 Pa.s).

The hydrophobic group 'R' is attached to the monomer 'B' through a divalent linking group 'Z' that is preferably capable of hydrating in aqueous media. By hydration it is meant that water molecules loosely associate with 'Z'. Upon heating or upon addition of electrolyte to the solution, the divalent linking group preferably apparently dehydrates or salts out of the solution. That is, the loose association with water molecules is at least partially broken. This apparently renders the -Z-R moiety more hydrophobic and increases the hydrophobe associative properties of the polymer.

Suitably, 'Z' is an ethoxy chain, either unsubstituted, substituted or interrupted by other alkoxy groups, such that the preferred hydration/dehydration properties are retained. Preferably, 'Z' is an unsubstituted ethoxy chain containing from 5 to 40 ethoxy groups which may be adjusted to yield appropriate polymer solubility and viscosity. Most preferably, 'Z' contains 10 to 40 ethoxy groups.

Alternatively, 'Z' is a poly-2-alkyl-2-oxazoline which is a ring-opened polymer of the formula

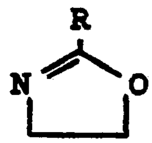

wherein R is hydrogen or lower alkyl, preferably methyl, ethyl or isopropyl. These polymers may be obtained as disclosed in U.S. Patent 3,483,141. The polymer may have repeating units of the formula:

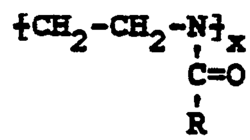

wherein x is the number of repeating units.

The symbol 'Y' represents a monovalent ionic species which contributes hydrophilic character to the molecule. The ionic species may be anionic or cationic. If a counterion associated with the ionic species is normally considered a cation, then the ionic species 'Y' is anionic.

Examples of anionic 'Y's are: phosphonates, sulfonates, carboxylates or sulfates. Sulfonates are preferred, and in particular sulfonates wherein the counterion is an alkali metal such as sodium or potassium. Alkaline earth metals, hydrogen, ammonia or lower alkyl-substituted ammonias are alternative cations.

When the counterion associated with the ionic species is normally considered an anion, then the ionic species is cationic. Examples of cationic 'Y's are the onium salts such as phosphonium, ammonium or sulfonium salts. Of the cationics, quaternary ammonium salts are preferred. Possible counterions include halides, carboxylates, sulfates, and nitrates.

The group 'Y' preferably is anionic if the polymer to be made is to be anionic or nonionic, and cationic if the polymer is to be cationic.

The group 'Y' is separated from the balance of the second monomer 'B' by a divalent hydrocarbyl radical or substituted hydrocarbyl radical 'M'. Hydrocarbyl and substituted hydrocarbyl have the same meanings as listed above. Preferably, M is $-(-CH_2-)_x$, wherein x represents the number of methylene groups separating the acid group 'Y' from the balance of the monomer molecule 'B' and may be 2, 3 or 4.

Suitable water-soluble monomers 'A' include those which are sufficiently water-soluble to form at least a 10 weight percent solution when dissolved in water and readily undergo addition polymerization to form polymers which are water-soluble. Exemplary water-soluble monomers include ethylenically unsaturated amides, such as acrylamide, methacrylamide and fumaramide and their N-substituted derivatives such as 2-acrylamido-2-methylpropane sulfonic acid, N-(dimethylaminomethyl)acrylamide as well as N-(trimethylammoniummethyl)acrylamide chloride and N-(trimethylammoniumpropyl)methacrylamide chloride; ethylenically unsaturated carboxylic acids such as acrylic acid, methacrylic acid, itaconic acid and fumaric acid; and other ethylenically unsaturated quaternary ammonium compounds such as vinylbenzyl trimethyl ammonium chloride, sulfoalkyl esters of unsaturated carboxylic acids such as 2-sulfoethyl methacrylate, aminoalkyl esters of unsaturated carboxylic acids such as 2-aminoethyl methacrylate, vinyl amines such as vinyl pyridine and vinyl morpholine, diallyl amines and diallyl ammonium compounds such as diallyl dimethyl ammonium chloride, vinyl heterocyclic amides such as vinyl pyrrolidone, vinylaryl sulfonates such as vinylbenzyl sulfonate, as well as the salts of the foregoing monomers.

The water-soluble monomer 'A' and the second monomer 'B' preferably are compatible. Incompatibility would mean that while one monomer is anionic, the other is cationic. Mixtures such as anionic/anionic, anionic/nonionic, nonionic/nonionic, cationic/nonionic and cationic/cationic would be considered compatible.

Of the foregoing water-soluble monomers, acrylamide and combinations of acrylamide and acrylic acid, including salts of acrylic acid such as sodium acrylate or ammonium acrylate, are preferred. Acrylamide and combinations thereof with up to 75 mole percent of acrylic acid or salt thereof, based on total water-soluble monomer, are more preferred. Most preferred are polymers wherein the water-soluble monomer is a mixture of acrylamide with from 5 to 50 mole percent, especially from 5 to 30 mole percent of acrylic acid or salt thereof.

The hydrophobe associative copolymer of the invention is preferably an addition copolymer of a water-soluble ethylenically unsaturated monomer 'A' and the second monomer 'B', a compound of the formula III, having sufficient concentration of the hydrophobic group 'R' to enable the copolymer to associate with the hydrophobic groups of other molecules of the copolymer and sufficient concentration of nonionic hydrophilic groups to enable the copolymer to control its hydrophilic-lyophilic balance.

Exemplary preferred polymers include copolymers from 90 to 99.995, more preferably from 98 to 99.9, most preferably from 99 to 99.5, mole percent of one or more water-soluble monomers 'A' with from 0.005 to 10, more preferably from 0.1 to 2, most preferably from 0.5 to 1, mole percent of monomer 'B'. For these copolymers, it is found that preferred amounts of the monomer 'B' will vary with the molecular weight of the copolymer. For example, a hydrophobe associative copolymer, having a weight average molecular weight near 200,000 preferably contains from 1 to 2 mole percent of the second monomer 'B'. Alternatively, the copolymer having a weight average molecular weight of 2,000,000 preferably contains from 0.02 to 0.1 mole percent of the monomer 'B', preferably from 0.05 to 0.1 mole percent. Also, the preferred percentage of the second monomer 'B' varies with the relative balance of hydrophilic moiety versus the hydrophobic moiety in the monomer 'B'. For example, as the balance shifts from hydrophilic to hydrophobic, generally less monomer 'B' is employed. Conversely, if the balance shifts to more hydrophilic, then more of the monomer 'B' is required.

The aforementioned hydrophobe associative copolymers may be advantageously prepared by copolymerizing the water-soluble monomers 'A' with the comonomers 'B' in an aqueous medium which may contain a chelating agent that complexes with any existing polymerization inhibitors. Monomers such as acrylamide often contain around 20 ppm of copper ion to prevent polymerization. A chelating agent such as ethylenediamine tetraacetic acid (EDTA), the pentasodium salt of (carboxymethylimino)bis(ethylenenitrilo)tetraacetic acid, tetrasodium ethylenedinitrilotetraacetate or the trisodium salt of N-(carboxymethyl)-N'-(2-hydroxyethyl)-N,N'-ethylenediglycine is then added to the reaction mixture to complex metallic salts. The copolymerization is then preferably initiated by adding a polymerization initiator capable of generating free radicals. Optionally, a chain-transfer agent may be included in the polymerization reaction mixture.

A solubilizing emulsifer may be used if desired to solubilize the monomer 'B' and to subsequently obtain a hydrophobe associative copolymer having a desirable concentration of hydrophobic moieties in the copolymer. However, because of the hydrophilic group on the second monomer 'B', this need for a solubilizing emulsifier is preferably eliminated or substantially reduced over a monomer which contains no hydrophilic group. Thus, the solubilizing emulsifier may be employed in an amount which is below the critical micelle concentration of the emulsifier and is less than that which reduces the concentration of monomer 'B' in the copolymer to a point that the hydrophobic groups of the copolymer will not associate in the presence of an electrolyte. Preferably, no solubilizing emulsifier is needed or used to solubilize the monomer 'B'.

Suitable emulsifiers which may be used when the group Y is anionic, include anionic agents such as alkali metal salts of alkyl sulfates and alkyl and aryl sulfates, e.g., dodecyl alkyl sulfosuccinates and sodium dodecylbenzene sulfate; fatty acid soaps, e.g. sodium oleate, sodium stearate and potassium oleate; alkali metal salts of sulfonated fatty alcohols, e.g., sodium dodecyl sulfate; sulfates of ethoxylated alcohols; alkyl phosphate esters, e.g., dodecyl hydrogen phosphate; and fluoro emulsifiers, e.g., perfluoroalkyl sulfates. Cationic emulsifers which may be used when the group Y is cationic are alkylamine hydrochlorides, e.g., dodecylamine hydrochloride and tridecylamine hydrochloride; quaternary alkyl or aryl ammonium halides such as dodecyl trimethyl ammonium chloride; and ethoxylated fatty amines. <u>McCutcheon's Detergents and Emulsifers</u>, North American Edition, 1980 Annual discloses additional emulsifiers which come under the above listed categories.

As an additional limit, when the hydrophilic/hydrophobic polymer is anionic or nonionic, an anionic emulsifier such as an alkali metal alkyl sulfate may be preferably employed as the emulsifier. When the hydrophobe associative copolymer is cationic, a cationic emulsifier such as dodecylamine hydrochloride may be employed. When the hydrophobe associative copolymer is nonionic or anionic, a nonionic emulsifier such as nonylphenoxy polyethylene glycol having 10 ethyleneoxy units per molecule or other water-dispersible nonionic surfactant as defined herein is suitably employed.

When using metallic ion inhibited water-soluble polymers, one may use chelating agents including those mentioned hereinbefore, with the pentasodium salt of (carboxymethylimino)bis(ethylenenitrilo)tetraacetic acid being preferred. When employed, the chelating agent is used in an amount in the range from 0.1 to 0.2, preferably from 0.1 to 0.15, weight percent based on the weight of total monomer.

Exemplary suitable polymerization initiators include the inorganic persulfates such as potassium persulfate, ammonium persulfate and sodium persulfate, azo oatalyst suoh as azobisisobutyronitrile and dimethyl azoisobutyrate; organic peroxygen compounds such as benzyl peroxide, t-butyl peroxide, diisopropyl benzene hydroperoxide and t-butyl hydroperoxide. Of these initiators, the oil-soluble types such as the organic peroxides and azo compounds are preferred. It is desirable to employ from 0.01 to 0.1 weight percent of initiator based on the weight of total monomers.

The hydrophobe associative copolymers are readily recovered from the aqueous medium when such is desired by conventional techniques including precipitation with organic solvents such as methanol or acetone or removal of water under vacuum or by azeotropic distillation or by drum drying. Alternatively, the aqueous medium containing the hydrophobe associative copolymer can be used as such.

It is also understood that hydrophobe associative copolymers of acrylamide, acrylic acid and amphiphilic monomer 'B' can be prepared by copolymerizing all three of these monomers or by copolymerizing acrylamide with the amphiphilic monomer 'B' and subsequently hydrolyzing a portion of the copolymerized acrylamide by contacting the copolymer with a base such as sodium hydroxide and/or sodium carbonate.

The amount of hydrophobe associative copolymer in the aqueous medium being used is sufficient to provide the desired increase in viscosity of the aqueous medium. Preferably, such amounts of copolymer range from 0.01 to 1.5 weight percent, most preferably from 0.05 to 1 weight percent, based on the aqueous medium.

In addition to the hydrophobe associative copolymer, the aqueous medium may also contain a nonpolymeric, water-soluble electrolyte including salts of monovalent and divalent cations such as ammonium, alkali metal and alkaline earth metal chlorides, bromides, nitrates, sulfates, carbonates, and acetates; monobasic and di- and tribasic acids such as hydrochloric acid, sulfuric acid, phosphoric acid and oxalic acid; and monovalent bases such as sodium hydroxide and potassium hydroxide. Such electrolytes may be present in the aqueous media as in the case of brines and other aqueous media containing water-soluble salts of various metals and other water-soluble electrolytes. Such aqueous media often contain from 0.01 to 20 weight percent of salts of alkali metals and alkaline earth metals. These electrolytes generally enhance hydrophobe association.between hydrophobic groups of the hydrophobe associative copolymer.

In addition to the hydrophobe associative copolymer and electrolyte (salt), the aqueous medium may contain a variety of other ingredients common to mobility control fluids, fracturing fluids, drilling muds, or other additives depending upon the intended use of the aqueous medium. The aqueous medium may also contain various additives such as antioxidants and antimicrobials, stabilizers, and fillers.

An exemplary fracturing fluid comprises the aforementioned hydrophobe associative copolymer, a stabilizer (antioxidant) such as a water-soluble thiosulfate; a fluid loss additive such as silica flour or a liquid hydrocarbon; a particulate solid proppânt such as sand, bauxite, glass beads; and an energizing gas such as nitrogen or carbon dioxide. In each instance, the proportions of ingredients are the proportions employed in conventional fracturing fluids.

To increase the viscosity of an aqueous medium containing substantial amounts, e.g., up to weight percent based on the aqueous medium of monovalent inorganic salts such as sodium chloride and up to 1 weight percent, usually from 0.0015.to 0.5 weight percent of salts of polyvalent cations such as calcium and magnesium, it is preferred to employ the polymerization product of one or more water-soluble monomers 'A', and at least one monomer 'B' of the formula III. The viscosity increase in this aqueous medium is retained or increased at temperatures over the range of from 30°C to 80°C. In many instances this viscosity increase is retained at temperatures substantially higher than 80°C. The preferred polymerization product will be a copolymer of acrylamide and acrylic acid with the compound of the formula III, wherein R is $C_4$-$C_{18}$ alkyl, and preferably is $C_6$-$C_{16}$ alkyl, wherein 'Z' is an ethoxyl chain with 10 to 40 ethoxy groups, 'M' is ethylene or n-propylene and 'Y' is sodium or potassium sulfonate.

In general, the type of application and the conditions characteristic of the application will determine the number of carbons in the hydrophobic moiety and the value of n in the monomer 'B' to give the desired viscosity response. For example, it is found that the monomer 'B' containing from 5 to 10 ethoxy groups in M, and wherein R is a $C_{12}$ to $C_{16}$ alkyl group is advantageously employed in an aqueous medium having a relatively low salt concentration and moderate temperature. On the other hand, the monomer 'B' containing from 10 to 40 ethoxy groups in M, and wherein R is a $C_6$ to $C_{10}$ alkyl group as a hydrophobic group is employed in an aqueous medium having a relatively high salt concentration and high temperature. Moreover, the desired viscosity response for a given set of conditions can be achieved by using a single monomer 'B', or a mixture of monomers 'B' which combine to provide the desired properties.

The following examples are given to illustrate the invention and should not be construed as limiting its scope. Unless otherwise indicated, all parts and percentages are by weight.

Examples 1A to 3C and Comparative Runs A, B and C

A. Preparation of the Monomer B

The monomer 'B' was prepared by the following procedures.

Fifty grams (50 g) of dodecanoxy(polyoxyethylene)$_{20}$ (50 g) with a hydroxyl number of 1.45 percent was dissolved in 40 $cm^3$ of toluene. To this solution, 6.5 g of itaconic acid and 0.5 g of p-toluene sulfonic acid were added. The mixture was heated to reflux and generated water was removed azeotropically using a Dean-Stark separator. The reaction was allowed to continue until water ceased to collect in the separator. After 5 hours, 0.8 $cm^3$ of water was collected. The remaining toluene was removed at 50°C and 666.61 Pa (5 mm of Hg) to give a waxy product. The conversion to the ester was determined by nuclear magnetic resonance comparing the intensity of the double-bond proton at $\delta$ equals 6.35 and 5.75 to the intensity of the methylene proton of the ester group at $\delta$ equals 4.25. The ratio of the two was 90 percent, which was compatible with the conversion of 89 percent calculated from the collected volume of water.

In a second step, 35 g dodecanoxy(polyoxyethylene)$_{20}$-itaconic monoester formed in the first step was dissolved in 70 $cm^3$ of t-butyl alcohol. While stirring, 4.5 g potassium t-butoxide was added to the solution which became a viscous suspension in a short time. The use of potassium t-butoxide was preferred to potassium hydroxide because the reaction with the free carboxylic acid was more complete and required a shorter time. To this mixture, 4.9 g of warm propane sulfone was added slowly. Then the mixture was heated to reflux. After 2 hours of refluxing, the t-butanol was removed in vacuum to yield 41 g of a yellowish waxy compound which was readily soluble in water, and of which a 2 percent aqueous solution stayed clear after being heated to 75°C. This product, an example of the self-emulsifying monomer 'B', was used in the following testing.

B. Copolymerization of Monomers 'A' and 'B'

In a general procedure for preparing the water-dispersible thickening agents of the present invention, 25 g of monomers consisting of the alkyloxy(polyoxyethylene) itaconoxy propane sulfonate, the monomer 'B', and the other water-soluble monomer 'A' were placed in a 300-$cm^3$ citrate botttle. Then a measured amount of VAZO*-64 (* Trademark of E.I.Dupont de Nemours) (2.4 g of a 2 percent VAZO*-64 in t-butanol solution and 1.8 g of a 2 percent aqueous solution of VERSENEX** 80) (** Trademark of The Dow Chemical Company) was added. The total weight of the contents was brought to 250 g with denionized water. The solution was purged with nitrogen and the bottle was capped and transferred to a steam tumbler. The polymerization was carried out at 60°C for 16 hours. The polymers obtained were transparent gels. In cases where the copolymers contained an acid group, their solutions were titrated with dilute NaOH to a pH of about 7.5.

A molecular weight of about 700,000 was determined by capillary viscometer based on the Mark-Houwink relation:

$$[\eta] = 6.31 \times 10^{5} \times [M]^{0.80} ,$$

where $\eta$ is intrinsic viscosity, and M is weight average molecular weight.

C. Polymer Composition

Copolymers of acrylamide, acrylic acid and the monomer 'B', made above were formed at different levels for each of the comonomers. The weights of each monomer used in the above procedure is listed in Table I.

TABLE I

| Polymer Designation | Acrylamide (g) | Acrylic Acid (g) | Monomer B (g) |
|---|---|---|---|
| Comparative Run | | | |
| A | 25.00 | 0 | 0 |
| B | 18.68 | 6.32 | 0 |
| C | 12.41 | 12.59 | 0 |
| Example 1A | 24.53 | 0 | 0.47 |
| Example 1B | 18.33 | 6.20 | 0.47 |
| Example 1C | 12.17 | 12.36 | 0.47 |
| Example 2A | 24.08 | 0 | 0.92 |
| Example 2B | 17.99 | 6.09 | 0.92 |
| Example 2C | 11.93 | 12.15 | 0.92 |
| Example 3A | 23.22 | 0 | 1.78 |
| Example 3B | 17.33 | 5.89 | 1.78 |
| Example 3C | 11.49 | 11.74 | 1.78 |

D. Effect of Concentration on the Viscosity

A solution of the resulting polymer was made at concentrations listed in Table II. The example designations were the same as those in Table I. Viscosities were measured with a LVF syncro-lectric Brookfield viscometer using an UL adapter at a speed of 6 rpm. The numbers listed in Table II are centipoise (Pascal-second).

TABLE II

| | Viscosity in Centipoise (Pascal-second) | | |
|---|---|---|---|
| Concentration Weight Percent | Comparitive Run A | Example 1A | Example 2A |
| 0.55 | 32.0 (0.032) | 78.0 (0.078) | 600 (0.6) |
| 0.40 | 15.0 (0.015) | 32.0 (0.032) | 200 (0.2) |
| 0.30 | 9.0 (0.009) | 15.5 (0.0155) | 45.0 (0.045) |
| 0.20 | 5.0 (0.005) | 9.5 (0.0095) | 16.5 (0.0165) |
| 0.10 | 2.5 (0.0025) | 3.0 (0.003) | 6.5 (0.0065) |

E. Effect of Electrolyte Concentration on Viscosity

Viscosities were measured at a concentration of 0.3 percent of the copolymer of the invention using a Brookfield LVF viscometer at a speed of 6 rpm. The electrolyte tested was sodium chloride at 0, 1, and 2 weight percent. The numbers indicated in Table III are centipoise (Pascal-second).

TABLE III

| | Viscosity in Centipoise (Pascal-second) | | |
|---|---|---|---|
| | 0 wt. % NaCl | 1.0 wt. % NaCl | 2.0 wt. % NaCl |
| Comparative Run B | 225 (0.225) | 8.0 (0.008) | 6.9 (0.0069) |
| Example 1B | 300 (0.300) | 725 (0.725) | 775 (0.775) |
| Example 2B | 325 (0.325) | 3200 (3.2) | 3200 (3.200) |
| Comparative Run C | 425 (0.425) | 8.2 (0.0082) | 7.0 (0.007) |
| Example 1C | 425 (0.425) | 69.0 (0.069) | 36.0 (0.036) |
| Example 2C | 550 (0.550) | 2750 (2.75) | 1650 (1.65) |
| Example 3C | 675 (0.675) | 5000 (5.00) | 3500 (3.50) |

F. Effect of Temperature on Viscosity

Polymers of the invention were tested at varying temperatures. In all cases the solution contained 1 weight percent of sodium chloride. The concentration of Comparison 'B' was 0.49 weight percent polymer. The concentration of Example 1B and Example 2B were 0.3 weight percent. Viscosity was measured with a Haake Rotovisco with Adaptor VI at a shear rate of 43.1 seconds $^{-1}$. Viscosities are cps (Pa•s).

TABLE IV

| | Viscosity in Centipoise (Pascal-second) | | | |
|---|---|---|---|---|
| | 25°C | 40°C | 60°C | 80°C |
| Comparative Run B | 39.5 (0.0395) | 30.0 (0.030) | 21.6 (0.0216) | 15.0 (0.015) |
| Example 1B | 69.8 (0.0698) | 60.5 (0.0605) | 53.0 (0.0861) | 43.2 (0.432) |
| Example 2B | 80.8 (0.080) | 85.7 (0.0857) | 86.1 (0.0861) | 68.7 (0.0687 |

**Claims for the Contracting States: BE, CH, DE, FR, GB, IT, LI, LU, NL, SE, GR**

1. A thickening agent comprising an aqueous-soluble polymerization product of:
(A) one or more water-soluble monomers which are sufficiently water-soluble to form at least a 10 weight percent solution when dissolved in water and which undergo addition polymerization to form polymers which are water-soluble; and
(B) at least one second monomer of the formula

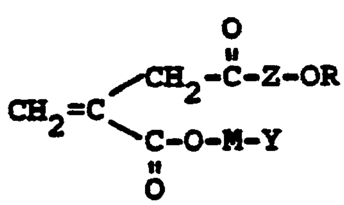

III

wherein R is a hydrocarbyl radical which may be substituted and which contributes hydrophobic character to the second monomer, Z is a divalent linking group, M is a divalent hydrocarbyl or substituted

hydrocarbyl radical and Y is an ionic species which contributes hydrophilic character to the second monomer.

2. The thickening agent of Claim 1, wherein Z is $-(-OCH_2CH_2-)-_n$ and wherein n is 5-40.

3. The thickening agent of Claim 2, wherein n is 10-40.

4. The thickening agent of any of Claims 1 to 3, wherein R is a $C_{6-16}$ alkyl group.

5. The thickening agent of any of Claims 1 to 3, wherein M is $-(-CH_2-)-_x$ and wherein x is 2, 3 or 4.

6. The thickening agent of any of Claims 1 to 3, wherein Y is $-SO_3Na$ or $-SO_3K$.

7. The thickening agent of Claim 6 wherein the water-soluble monomers are acrylamide, acrylic acid, salts of acrylic acid or mixtures thereof.

8. The thickening agent of Claim 1, wherein the polymer has a weight average molecular weight of from 800,000 to 2.5 million as determined by intrinsic viscosity.

9. A composition containing a thickening agent comprising the aqueous-soluble polymerization product of:

(A) one or more water-soluble monomers which are sufficiently water-soluble to form at least a 10 weight percent solution when dissolved in water and which undergo addition polymerization to form polymers which are water-soluble; and

(B) at least one second monomer of the formula

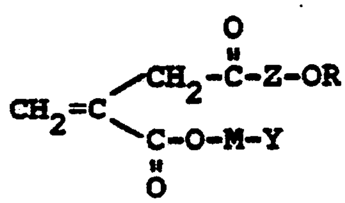

III

wherein R is a hydrocarbyl radical which may be substituted and which contributes hydrophobic character to the second monomer, Z is a divalent linking group, M is a divalent hydrocarbyl or substantial hydrocarbyl radical and Y is an ionic species which contributes hydrophilic character to the second monomer;

and an aqueous solution of an inorganic salt in an amount such that at a temperature in the range of up to 80°C, the aqueous medium containing the water-dispersible thickening agent exhibits a further increase in viscosity with the inorganic salt over a similar solution without the inorganic salt.

10. A composition as in Claim 9 wherein the concentration of hydrophobic moiety "R" in the second monomer (B) is sufficient to increase the viscosity of the aqueous solution to at least twice that achieved by a polymer comprising the polymerization product of 'A' without comonomer 'B' at an equivalent molecular weight and concentration in the aqueous solution.

**Claims for the Contracting States: AT, ES**

1. A method for the preparation of a thickening agent which comprises copolymerizing in an aqueous medium:

(A) one or more water-soluble monomers which are sufficiently water-soluble to form at least a 10 weight percent solution when dissolved in water and which undergo addition polymerization to form polymers which are water-soluble; with

(B) at least one second monomer of the formula

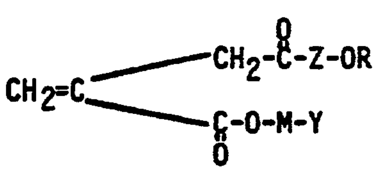

III

wherein R is a hydrocarbyl radical which may be substituted and which contributes hydrophobic character to the second monomer, Z is a divalent linking group, M is a divalent hydrocarbyl or substituted hydrocarbyl radical and Y is an ionic species which contributes hydrophilic character to the second monomer.

2. The method of Claim 1, wherein Z is $-(-OCH_2CH_2-)-_n$ and wherein n is 5-40.

3. The method of Claim 2, wherein n is 10-40.

4. The method of any of Claims 1 to 3, wherein R is a $C_{6-16}$ alkyl group.

5. The method of any of Claims 1 to 3, wherein M is $-(-CH_2-)-_x$ and wherein x is 2, 3 or 4.

6. The method of any of Claims 1 to 3, wherein Y is $-SO_3Na$ or $-SO_3K$.

7. The method of Claim 6 wherein the water-soluble monomers are acrylamide, acrylic acid, salts of acrylic acid or mixtures thereof.

8. The method of Claim 1, wherein the polymer has a weight average molecular weight of from 800,000 to 2.5 million as determined by intrinsic viscosity.

9. A method for the preparation of a composition containing a thickening agent which comprises mixing the aqueous-soluble polymerization product of:

(A) one or more water-soluble monomers which are sufficiently water-soluble to form at least a 10 weight percent solution when dissolved in water and which undergo addition polymerization to form polymers which are water-soluble; and

(B) at least one second monomer of the formula

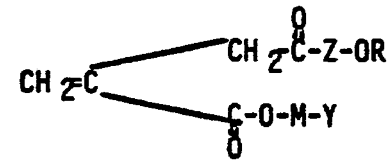

wherein R is a hydrocarbyl radical which may be substituted and which contributes hydrophobic character to the second monomer, Z is a divalent linking group, M is a divalent hydrocarbyl or substituted hydrocarbyl radical and Y is an ionic species which contributes hydrophilic character to the second monomer;

with an aqueous solution of an inorganic salt in an amount such that at a temperature in the range of up to 80°C, the aqueous medium containing the water-dispersible thickening agent exhibits a further increase in viscosity with the inorganic salt over a similar solution without the inorganic salt.

10. The method of Claim 9 wherein the concentration of hydrophobic moiety "R" in the second monomer (B) is sufficient to increase the viscosity of the aqueous solution to at least twice that achieved by a polymer comprising the polymerization product of 'A' without comonomer 'B' at an equivalent molecular weight and concentration in the aqueous solution.

**Patentansprüche für die Vertragsstaaten: BE, CH, DE, FR, GB, IT, LI, LU, NL, SE, GR**

1. Verdickungsmittel, umfassend ein wasserlösliches Polymerisationsprodukt aus:

(A) einem oder mehreren wasserlöslichen Monomeren, die ausreichend wasserlöslich sind, um eine mindestens 10 Gew.-%ige Lösung bei Auflösen in Wasser zu bilden und die zur Bildung wasserlöslicher Polymere eine Additions-Polymerisation eingehen; und

(B) mindestens einem zweiten Monomer der Formel

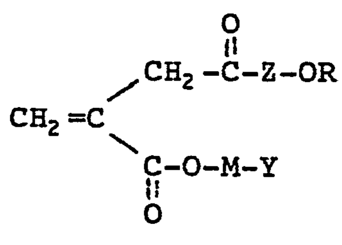

III

worin R ein Kohlenwasserstoffrest ist, der substituiert sein kann und dem zweiten Monomer hydrophobe Eigenschaften verleiht, Z eine divalente Verknüpfungsgruppe ist, M ein divalenter Kohlenwasserstoff oder substituierter Kohlenwasserstoffrest ist und Y eine Ionenspezies ist, die dem zweiten Monomer hydrophile Eigenschaften verleiht.

2. Verdickungsmittel nach Anspruch 1, worin Z $-(-OCH_2CH_2-)_n$ ist und worin n 5 bis 40 ist.

3. Verdickungsmittel nach Anspruch 2, worin n 10 bis 40 ist.

4. Verdickungsmittel nach einem der Ansprüche 1 bis 3, worin R eine $C_6$–$C_{16}$-Alkylgruppe ist.

5. Verdickungsmittel nach einem der Ansprüche 1 bis 3, worin M $-(-CH_2-)_x$ ist und worin x 2, 3 oder 4 ist.

6. Verdickungsmittel nach einem der Ansprüche 1 bis 3, worin Y $-SO_3Na$ oder $-SO_3K$ ist.

7. Verdickungsmittel nach Anspruch 6, worin die wasserlöslichen Monomere Acrylamid, Acrylsäure, Salze der Acrylsäure oder Gemische davon sind.

8. Verdickungsmittel nach Anspruch 1, worin das Polymer ein durchschnittliches Molekulargewicht von 800 000 bis 2,5 Millionen besitzt, bestimmt über die intrinsische Viskosität.

9. Zusammensetzung, enthaltend ein Verdickungsmittel, umfassend das wasserlösliche Polymerisationsprodukt aus:

(A) einem oder mehreren wasserlöslichen Monomeren, die ausreichend wasserlöslich sind, um bei Auflösen in Wasser eine mindestens 10 Gew.-%ige Lösung zu bilden, und die zur Bildung von wasserlöslichen Polymeren eine Additions-Polymerisation eingehen und

(B) mindestens einem zweiten Monomer der Formel

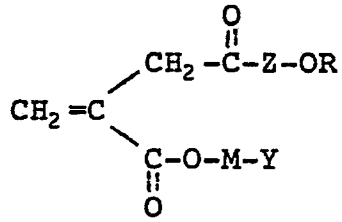

III

worin R ein Kohlenwasserstoffrest ist, der substituiert sein kann und der dem zweiten Monomer hydrophobe Eigenschaften verleiht, Z eine divalente Verknüpfungsgruppe ist, M ein divalenter Kohlenwasserstoff oder substituierter Kohlenwasserstoffrest ist und Y eine Ionenspezies ist, die dem zweiten Monomer hydrophile Eigenschaften verleiht;

und eine wäßrige Lösung eines anorganischen Salzes in solcher Menge, daß bei einer Temperatur im Bereich bis zu 80°C, das wäßrige Medium, das das Wasser-dispergierbare Verdickungsmittel enthält, einen weiteren Anstieg der Viskosität mit dem anorganischen Salz aufweist im Vergleich zu einer ähnlichen Lösung ohne anorganisches Salz.

10. Zusammensetzung nach Anspruch 9, worin die Konzentration der hydrophoben Gruppe "R" im zweiten Monomer (B) ausreichend ist, um die Viskosität der wäßrigen Lösung mindestens um das Doppelte zu erhöhen, als dies durch ein Polymer geschieht, welches das Polymerisationsprodukt von "A" ohne Comonomer "B" bei gleichem Molekulargewicht und gleicher Konzentration in der wäßrigen Lösung enthält.

**Patentansprüche für die Vertragsstaaten: AT, ES**

1. Verfahren zur Herstellung eines Verdickungsmittels, umfassend Copolymerisation in einem wäßrigen Medium von:

(A) einem oder mehreren wasserlöslichen Monomeren, die ausreichend wasserlöslich sind, um bei Auflösen in Wasser eine mindestens 10 Gew.-%ige Lösung zu bilden, und die zur Bildung wasserlöslicher Polymere eine Additions-Polymerisation eingehen, mit

(B) mindestens einem zweiten Monomer der Formel

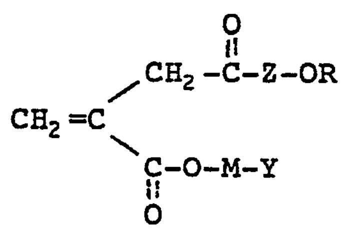

III

worin R ein Kohlenwasserstoffrest ist, der substituiert sein kann und der dem zweiten Monomer hydrophobe Eigenschaften verleiht, Z eine divalente Verknüpfungsgruppe ist, M ein divalenter Kohlenwasserstoff oder substituierter Kohlenwasserstoffrest ist und Y eine Ionenspezies ist, die dem zweiten Monomer hydrophile Eigenschaften verleiht.

2. Verfahren nach Anspruch 1, worin Z $-(-OCH_2CH_2-)_n-$ ist und worin n 5 bis 40 ist.

3. Verfahren nach Anspruch 2, worin n 10 bis 40 ist.

4. Verfahren nach einem der Ansprüche 1 bis 3, worin R eine $C_6$–$C_{16}$-Alkylgruppe ist.

5. Verfahren nach einem der Ansprüche 1 bis 3, worin M $-(-CH_2-)_x-$ ist und worin x 2, 3 oder 4 ist.

6. Verfahren nach einem der Ansprüche 1 bis 3, worin Y $-SO_3Na$ oder $-SO_3K$ ist.

7. Verfahren nach Anspruch 6, worin die wasserlöslichen Monomere Acrylamid, Acrylsäure, Salze der Acrylsäure oder Gemische davon sind.

8. Verfahren nach Anspruch 1, worin das Polymer ein durchschnittliches Molekulargewicht von 800 000 bis 2,5 Millionen hat, bestimmt durch intrinsische Viskosität.

9. Verfahren zur Herstellung einer Zusammensetzung, enthaltend ein Verdickungsmittel, umfassend das Vermischen eines wasserlöslichen Polymerisationsprodukts aus:

(A) einem oder mehreren wasserlöslichen Monomeren, die ausreichend wasserlöslich sind, um bei Auflösen in Wasser eine mindestens 10 Gew.-%ige Lösung zu bilden, und die zur Bildung von wasserlöslichen Polymeren eine Additions-Polymerisation eingehen und

(B) mindestens einem zweiten Monomer der Formel

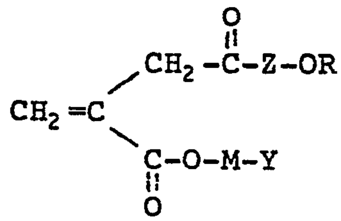 III

worin R ein Kohlenwasserstoffrest ist, der substituiert sein kann und der dem zweiten Monomer hydrophobe Eigenschaften verleiht, Z eine divalente Verknüpfungsgruppe ist, M ein divalenter Kohlenwasserstoff oder substituierter Kohlenwasserstoffrest ist und Y eine Ionenspezies ist, die dem zweiten Monomer hydrophile Eigenschaften verleiht;

mit einer wäßrigen Lösung eines anorganischen Salzes in solcher Menge, daß bei einer Temperatur im Bereich bis zu 80°C, das wäßrige Medium, das das Wasser-dispergierbare Verdickungsmittel enthält, einen weiteren Anstieg der Viskosität mit dem anorganischen Salz aufweist im Vergleich zu einer ähnlichen Lösung ohne das anorganische Salz.

10. Verfahren nach Anspruch 9, worin die Konzentration der hydrophoben Gruppe "R" im zweiten Monomer (B) ausreichend ist, um die Viskosität der wäßrigen Lösung mindestens um das Doppelte zu erhöhen, als dies durch ein Polymer geschieht, welches das Polymerisationsprodukt von "A" ohne Comonomer "B" bei gleichem Molekulargewicht und gleicher Konzentration in der wäßrigen Lösung enthält.

**Revendications pour les Etats contractants: BE, CH, DE, FR, GB, IT, LI, LU, NL, SE, GR**

1. Agent épaississant comprenant un produit hydrosoluble de polymérisiation:

(A) d'un ou plusieurs monomères hydrosolubles qui sont suffisamment hydrosolubles pour former au moins une solution à 10% en poids lorsqu'ils sont dissous dans l'eau et qui subissent une polymérisation par addition pour former des polymères qui sont hydrosolubles; et

(B) d'au moins un second monomère de formule

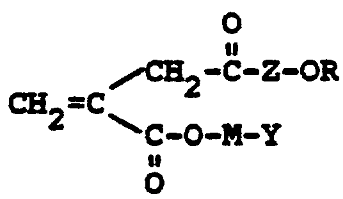 III

dans laquelle R est un radical hydrocarboné qui peut être substitué et qui contribue au caractère hydrophobe du second monomère, Z est un groupe de liaison divalent, M est un radical hydrocarboné ou hydrocarboné substitué divalent et Y est une espèce ionique qui contribue au caractère hydrophile du second monomère.

2. Agent épaississant selon la revendication 1, dans lequel Z est $-(-OCH_2CH_2-)_n$ et dans lequel n a une valeur de 5–40.

3. Agent épaississant selon la revendication 2, dans lequel n a une valeur de 10–40.

4. Agent épaississant selon l'une quelconque des revendications 1 à 3, dans lequel R est un groupe alkyle en $C_6$–$C_{16}$.

5. Agent épaississant selon l'une quelconque des revendications 1 à 3, dans lequel M est $-(-CH_2-)_x$ et dans lequel x a la valeur 2, 3 ou 4.

6. Agent épaississant selon l'une quelconque des revendications 1 à 3, dans lequel Y est $-SO_3Na$ ou $-SO_3K$.

7. Agent épaississant selon la revendication 6, dans lequel les monomères hydrosolubles sont l'acrylamide, l'acide acrylique, les sels de l'acide acrylique, ou leurs mélanges.

8. Agent épaississant selon la revendication 1, dans lequel le polymère a une masse moléculaire moyenne en poids de 800 000 à 2,5 millions, déterminée à l'aide de la viscosité intrinsèque.

9. Composition contenant un agent épaississant comprenant le produit de polymérisation hydrosoluble:

(A) d'un ou plusieurs monomères hydrosolubles qui sont suffisamment hydrosolubles pour former au moins une solution à 10% en poids lorsqu'ils sont dissous dans l'eau et qui subissent une polymérisation par addition pour former des polymères qui sont hydrosolubles; et

(B) d'au moins un second monomère de formule

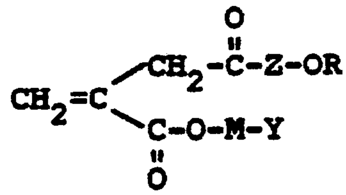

III

dans laquelle R est un radical hydrocarboné qui peut être substitué et qui contribue au caractère hydrophobe du second monomère, Z est un groupe de liaison divalent, M est un radical hydrocarboné ou hydrocarboné substitué divalent et Y est une espèce ionique qui contribue au caractère hydrophile du second monomère;

et une solution aqueuse d'un sel minéral en une quantité telle que, à une température dans la gamme montant jusqu'à 80°C, le milieu aqueux contenant l'agent épaississant dispersable dans l'eau présente une élévation supplémentaire de viscosité avec le sel minéral, par rapport à une solution similaire sans le sel minéral.

10. Composition selon la revendication 9, dans laquelle la concentration du groupement hydrophobe "R" dans le second monomère (B) est suffisante pour élever la viscosité de la solution aqueuse au moins au double de celle que l'on obtient au moyen d'un polymère comprenant le produit de polymérisation de (A) sans comonomère (B), pour une masse moléculaire équivalente et une concentration équivalente dans la solution aqueuse.

**Revendications pour les Etats contractants: AT, ES**

1. Procédé de préparation d'un agent épaississant qui comprend la copolymérisation, dans un milieu aqueux:

(A) d'un ou plusieurs monomères hydrosolubles qui sont suffisamment hydrosolubles pour former au moins une solution à 10% en poids lorsqu'ils sont dissous dans l'eau et qui subissent une polymérisation par addition pour former des polymères qui sont hydrosolubles; avec

(B) au moins un second monomère de formule

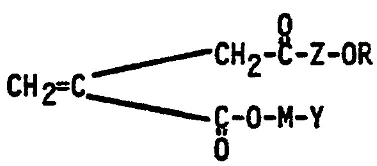

III

dans laquelle R est un radical hydrocarboné qui peut être substitué et qui contribue au caractère hydrophobe du second monomère, Z est un groupe de liaison divalent, M est un radical hydrocarboné ou hydrocarboné substitué divalent et Y est une espèce ionique qui contribue au caractère hydrophile du second monomère.

2. Procédé selon la revendication 1, dans lequel Z est $-(-OCH_2CH_2-)-_n$ et dans lequel n a une valeur de 5–40.

3. Procédé selon la revendication 2, dans lequel n a une valeur de 10–40.

4. Procédé selon l'une quelconque des revendications 1 à 3, dans lequel R est un groupe alkyle en $C_6$–$C_{16}$.

5. Procédé selon l'une quelconque des revendications 1 à 3, dans lequel M est $-(-CH_2-)-_x$ et dans lequel x a la valeur 2, 3 ou 4.

6. Procédé selon l'une quelconque des revendications 1 à 3, dans lequel X est $-SO_3Na$ ou $-SO_3K$.

7. Procédé selon la revendication 6, dans lequel les monomères hydrosolubles sont l'acrylamide, l'acide acrylique, les sels de l'acide acrylique, ou leurs mélanges.

8. Procédé selon la revendication 1, dans lequel le polymère a une masse moléculaire moyenne en poids de 800 000 à 2,5 millions, déterminée à l'aide de la viscosité intrinsèque.

9. Procédé de préparation d'une composition contenant un agent épaississant qui comprend le mélange du produit de polymérisation hydrosoluble:

(A) d'un ou plusieurs monomères hydrosolubles qui sont suffisamment hydrosolubles pour former au moins une solution à 10% en poids lorsqu'ils sont dissous dans l'eau et qui subissent une polymérisation par addition pour former des polymères qui sont hydrosolubles; et

(B) d'au moins un second monomère de formule

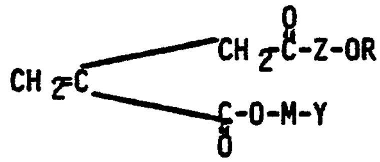

dans laquelle R est un radical hydrocarboné qui peut être substitué et qui contribue au caractère hydrophobe du second monomère, Z est un groupe de liaison divalent, M est un radical hydrocarboné ou hydrocarboné substitué divalent et Y est une espèce ionique qui contribue au caractère hydrophile du second monomère;

avec une solution aqueuse d'un sel minéral en une quantité telle que, à une température dans la gamme montant jusqu'à 80°C, le milieu aqueux contenant l'agent épaississant dispersable dans l'eau présente une élévation supplémentaire de viscosité avec le sel minéral, par rapport à une solution similaire sans le sel minéral.

10. Procédé selon la revendication 9, dans lequel la concentration du groupement hydrophobe "R" dans le second monomère (B) est suffisante pour élever la viscosité de la solution aqueuse au moins au double de celle que l'on obtient au moyen d'un polymère comprenant le produit de polymérisation de (A) sans comonomère (B), pour une masse moléculaire équivalente et une concentration équivalente dans la solution aqueuse.